# EUROPÄISCHE PATENTSCHRIFT

(11) **EP 0 338 982 B1**
(45) Veröffentlichungstag und Bekanntmachung des Hinweises auf die Patenterteilung: **10.11.1993**
(21) Anmeldenummer: 89810263.7
(22) Anmeldetag: 06.04.1989
(51) Int. Cl.: F16B 13/14

(54) **Dübel mit siebartiger Hülse**
Dowel with sievelike hull
Cheville à enveloppe en forme de crible

(30) Priorität: 18.04.1988 DE 3812913
(43) Veröffentlichungstag der Anmeldung: 25.10.1989
(73) Patentinhaber: HILTI Aktiengesellschaft, 9494 Schaan (LI)
(72) Erfinder: Leibhard, Erich, D-8000 München 71 (DE); Luescher, André, CH-9475 Sevelen (CH)
(74) Vertreter: Wildi, Roland

(56) Entgegenhaltungen:
- EP-A- 0 172 134
- BE-A- 413 855
- FR-A- 444 630
- FR-A- 2 184 041

## Beschreibung

Die Erfindung betrifft einen Dübel zur Verankerung, insbesondere in Leicht- und Hohlbauteilen mit siebartiger, der Aufnahme einer aushärtenden Masse und eines Verankerungselementes dienenden Hülse, wobei die Hülse mit Lappen als Haltemittel versehen ist, an dem, dem einführrichtungsseitigen Ende entgegengesetzten Ende einen Flansch (4) als Anschlagmittel aufweist und an ihrem einführrichtungsseitigen Ende durch Einfaltungen verschlossen ist.

Verankerungen mittels aushärtender Massen kommen durch adhäsive Verbindung der aushärtenden Masse mit der Bohrlochwandung und durch Formschluss der aushärtenden Masse in Hohlräumen des Untergrundes zustande. Insbesondere bei grössere Hohlräume aufweisenden Untergrundmaterialien ist ein unkontrolliertes Wegfliessen der noch nicht ausgehärteten Masse zu verhindern.

Bei einer aus der DE-OS 2 615 316 bekannten Lösung wird die aushärtende Masse in eine siebartige, aus einem Kunststoffnetz bestehende Hülse eingebracht. Die aushärtende Masse soll im wesentlichen in der Hülse verbleiben, wobei sich das Netzwerk im Bereich der Hohlräume ausdehnen soll. Die Eigensteifigkeit dieser aus Netzwerk bestehenden Hülse ist aber derart gering, dass diese mittels eines in die Hülse einzuführenden Stützkörpers versteift werden muss, was zu einem erheblichen Mehraufwand führt.

Weitere für die genannte Anwendung verwendete Siebhülsen bestehen aus Drahtgitter. Die Verarbeitung solcher Drahtgitter zu Siebhülsen ist allerdings sehr aufwendig, da die Gefahr beseitigt werden muss, dass sich im Randbereich des Zuschnitts einzelne Drähte lösen und das Drahtgitter somit am Rand ausfranst.

Aus der FR-A-2 184 041 ist eine Klebepatrone bekannt, die aus einer inneren und einer äusseren Ampulle aus Glas besteht. Um ein Wegfliessen der Mörtelmasse im Hohlmauerwerk zu verhindern, wird diese Klebepatrone umgeben von einer Siebhülse in einem Hohlmauerwerk eingesetzt. Diese Siebhülse besteht aus Metall und weist gestanzte Oeffnungen auf. Die Siebhülse ist zylindrisch ausgebildet und ihre Längsränder liegen im wesentlichen stumpf aneinander. Bei auftretenden Spannungen kann sich die Siebhülse im Bereich der Längsränder sehr stark öffnen.

Aus der FR-A-444 630 ist ein Verfahren zur Herstellung von Streckmetall bekannt. Es geht dabei um die Herstellung für sich, ohne dass konkrete Anwendungen aufgezeigt werden.

Der Erfindung liegt die Aufgabe zugrunde, eine Formstabile siebartige Hülse für einen mittels einer aushärtbaren Masse verankerbaren Dübel zu schaffen, die sich einfach und wirtschaftlich herstellen lässt.

Gemäss der Erfindung wird dies dadurch erreicht, dass die Hülse aus einem gerollten Streifen Streckmetall besteht, dessen Längsrander miteinander verbunden sind.

Streckmetall wird aus Blech hergestellt, indem eine Vielzahl von Schlitzen in das Blech eingeschnitten oder eingestanzt werden und das Blech anschliessend quer zu den Schlitzen gestreckt wird. Die Herstellkosten von Streckmetall liegen etwa bei der Hälfte von entsprechendem Drahtgitter, da es sich um ein Massenprodukt handelt, das in beliebigen Längen und Breiten hergestellt werden kann.

Beim Einbringen der aushärtenden Masse kann in der Hülse ein erheblicher Druck entstehen. Um durch diesen Druck eine Verformung der Hülse zu vermeiden, ist es vorteilhaft, dass die Hülse aus einem gerollten Streifen besteht, dessen Längsränder miteinander verbunden sind. Die Längsränder können beispielsweise durch Kleben, Löten oder Schweissen miteinander verbunden werden. Da Streckmetall gut verformbar ist, können die Längsränder auch klauenartig miteinander verhakt werden. Die dabei zustandekommende Verbindung ist formschlüssig und somit sehr stark belastbar. Das klauenartige Verhaken der Längsränder kann nach dem Rollen des Streifens in einem Arbeitsgang erfolgen.

Für das Herstellen der Hülse wird zweckmässigerweise Streckmetall mit einer Maschenlänge von 0,6 bis 3 mm verwendet. Die Materialdicke bzw die Stegbreite kann dabei etwa 0,2 bis 1,5 mm betragen.

Die Hülse ist an ihrem einführrichtungsseitigen Ende durch Einfaltungen verschlossen. Durch das Verschliessen der Hülse an ihrem einführrichtungsseitigen Ende wird erreicht, dass die aushärtende Masse durch das Streckmetall hindurch in die umliegenden Hohlräume gelangen kann. Das Anbringen der Einfaltungen kann vor oder nach dem Rollen des ebenen Streckmetalls zu einer Hülse erfolgen.

An dem, dem einführrichtungsseitigen Ende entgegensetzten Ende weist die Hülse Anschlagmittel auf. Solche Anschlagmittel dienen beim Einführen der Hülse in ein Bohrloch als Tiefenanschlag. Die Anschlagmittel können beispielsweise als einzelne Vorsprünge ausgebildet werden, welche sich beim Einführen der Hülse in ein Bohrloch an der Oberfläche des Aufnahmematerials abstützen. Eine weitere vorteilhafte Ausführung besteht in der Ausbildung der Anschlagmittel als Flansch. Durch einen Flansch wird das beim Einführen eines Verankerungselementes besonders stark beanspruchte Ende der Hülse verstärkt und es wird zudem das Bohrloch abgedichtet und ein Austreten der aushärtenden Masse aus dem Bohrloch verhindert.

Die Hülse ist mit Haltemitteln versehen. Die Haltemittel dienen beim Einsetzen der Hülse in ein Bohrloch der axialen Sicherung im Aufnahmematerial. Somit wird verhindert, dass die Hülse nach dem Einbringen einer aushärtenden Masse beim Herausziehen des Einfüllstutzens eines Dosiergerätes mitsamt dem Einfüllstutzen wieder aus dem Bohrloch herausgezogen wird. Die Haltemittel können beispielsweise als vorspringende Noppen ausgebildet werden. Besonders zweckmässig ist jedoch die Ausbildung der Haltemittel als radial abstehende Lappen, welche sich dem unterschiedlichen Durchmesser des Bohrloches anpassen können.

Die Erfindung soll nachstehend, anhand der sie beispielsweise wiedergebenden Zeichnungen, näher erläutert werden. Es zeigen
- Fig. 1: eine siebartige Hülse eines erfindungsgemässen Dübels, in Ansicht,
- Fig. 2: einen Ausschnitt der in Fig. 1 dargestellten Hülse, im Schnitt dargestellt, in vergrössertem Massstab,
- Fig. 3: einen Querschnitt durch die in Fig. 1 dargestellte Hülse, entlang der Linie III-III, in vergrössertem Massstab,
- Fig. 4: einen Ausschnitt aus der in Fig. 1 dargestellten Hülse gemäss A, in stark vergrössertem Massstab.

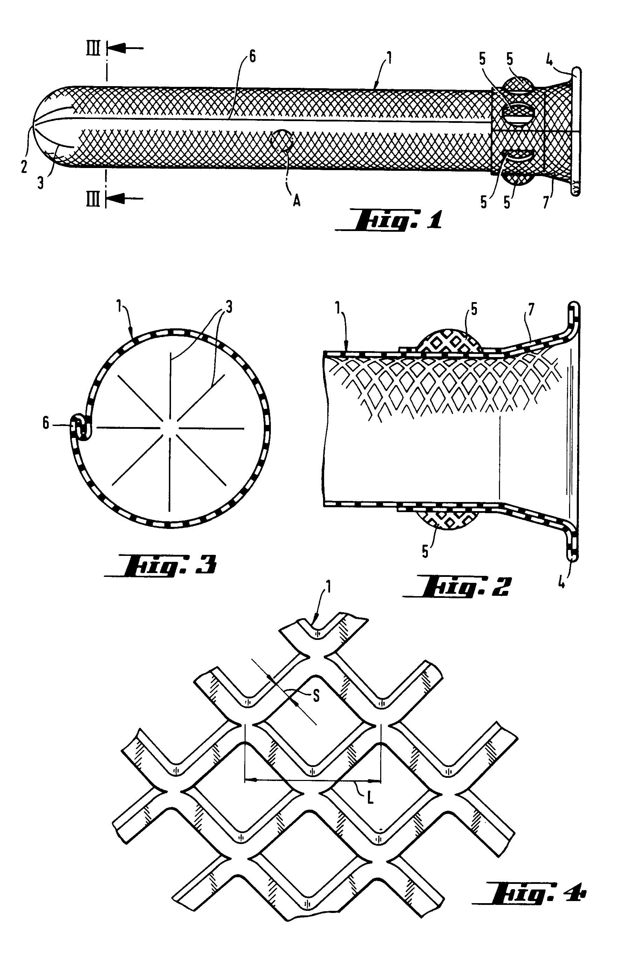

Eine aus Fig. 1 bis 3 ersichtliche Hülse 1 weist ein einführrichtungsseitiges Ende 2 auf, das durch Einfaltungen 3 verschlossen ist. An dem, dem einführrichtungsseitigen Ende 2 entgegengesetzten Ende ist die Hülse 1 mit einem Flansch 4 versehen. Im Bereich des Flansches 4 sowie in dem in Einführrichtung daran anschliessenden Bereich weist die Hülse 1 doppelte Wandstärke auf. Im Bereich der doppelten Wandstärke ist die Hülse 1 ausserdem mit radial abstehenden Lappen 5 versehen. Diese Lappen 5 sind aus dem Streckmetall der Hülse 1 herausgestanzt und abgebogen. Die Lappen 5 dienen als Haltemittel zur axialen Sicherung der Hülse 1 im Bohrloch. Die Hülse 1 ist aus einem Streifen von Streckmetall gerollt, wobei Längsränder 6 des Streifens klauenartig ineinander verhakt sind. Dieses Verhaken der Längsränder 6 ergibt einen einfachen und sicheren Verschluss der Hülse 1. Die Hülse 1 kann somit auch bei höherem Auspressdruck einer in die Hülse 1 einzubringenden aushärtenden Masse nicht aufplatzen. In dem an den Flansch 4 angrenzenden Bereich ist die Hülse 1 mit einem Konus 7 versehen. Dieser Konus 7 dient einerseits der Zentrierung der Hülse 1 in einem Bohrloch und erleichtert andererseits das Einführen eines Einfüllstutzens für die aushärtende Masse in die Hülse 1.

Die aus Fig. 4 ersichtliche, stark vergrösserte Darstellung zeigt die Struktur des Streckmetalls. Die Maschenlänge L des Streckmetalls beträgt vorzugsweise etwa 0,6 bis 3,0 mm und die Stegbreite S etwa 0,2 bis 1,5 mm.

## Patentansprüche

1. Dübel zur Verankerung insbesondere in Leicht- und Hohlbauteilen, mit siebartiger, der Aufnahme einer aushärtenden Masse und eines Verankerungselementes dienenden Hülse (1), wobei die Hülse mit Lappen (5) als Haltemittel versehen ist, an dem, dem einführrichtungsseitigen Ende (2) entgegengesetzten Ende einen Flansch (4) als Anschlagmittel aufweist und an ihrem einführrichtungsseitigen Ende (2) durch Einfaltungen (3) verschlossen ist, **dadurch gekennzeichnet,** dass die Hülse (1) aus einem gerollten Streifen Streckmetall besteht, dessen Längsränder (6) miteinander verbunden sind.

2. Verwendung von Streckmetall für einen Dübel nach Anspruch 1, mit einer Maschenlänge (L) von 0,6 bis 3,0 mm.

## Claims

1. A dowel for anchoring in particular lightweight and hollow components, comprising a sieve-like sleeve (1) for accommodating a hardening substance and an anchoring element, wherein the sleeve is provided with flaps as a holding means, which has a flange (4) serving as a stop at the end opposite the insert end (2) and which is closed at the insert end (2) by folds (3), **characterised in that** the sleeve (1) is made of a rolled strip of expanded metal, the longitudinal ends (6) of which are connected to one another.

2. The use of expanded metal for a dowel according to claim 1, having a mesh length (L) of between 0.6 and 3.00 mm.

## Revendications

1. Cheville d'ancrage, notamment dans des éléments de construction légers et creux, comprenant une enveloppe (1) en forme de crible servant à recevoir une masse durcissable et un élément d'ancrage, l'enveloppe étant dotée de pattes (5) comme moyens de retenue, présentant un collet (4) comme moyen de butée à son extrémité opposée à l'extrémité (2) située dans la direction d'introduction, et étant fermée par des replis à son extrémité (2) située dans la direction d'introduction, **caractérisée** en ce que l'enveloppe (1) est constituée d'une bande enroulée de métal déployé, dont les bords longitudinaux (6) sont mutuellement assemblés.

2. Utilisation de métal déployé pour une cheville selon la revendication 1, avec une longueur de mailles (L) de 0,6 à 3,0 mm.
